(19) Europäisches Patentamt / European Patent Office / Office européen des brevets

(11) **EP 4 395 107 B1**

(12) **EUROPEAN PATENT SPECIFICATION**

(45) Date of publication and mention of the grant of the patent:
**28.01.2026 Bulletin 2026/05**

(21) Application number: **22860425.2**

(22) Date of filing: **22.08.2022**

(51) International Patent Classification (IPC):
$H02J\ 7/00^{(2026.01)}$    $B60L\ 53/62^{(2019.01)}$
$H02M\ 1/08^{(2006.01)}$    $H02M\ 1/38^{(2007.01)}$

(52) Cooperative Patent Classification (CPC):
**B60L 53/62; H02J 7/0047; H02J 7/00712; H02M 1/08; H02M 1/38;** H02M 1/0058; Y02T 10/70; Y02T 10/7072; Y02T 90/12

(86) International application number:
**PCT/CN2022/113854**

(87) International publication number:
**WO 2023/025079 (02.03.2023 Gazette 2023/09)**

(54) **DEAD TIME DETERMINATION METHOD, CHARGING DRIVING CIRCUIT AND APPARATUS, AND DEVICE AND MEDIUM**

TOTZEITBESTIMMUNGSVERFAHREN, LADETREIBERSCHALTUNG UND -VORRICHTUNG SOWIE GERÄT UND MEDIUM

PROCÉDÉ DE DÉTERMINATION DE TEMPS MORT, CIRCUIT ET APPAREIL D'ATTAQUE DE CHARGE, DISPOSITIF ET SUPPORT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.08.2021 CN 202110988747**

(43) Date of publication of application:
**03.07.2024 Bulletin 2024/27**

(73) Proprietor: **Changchun Jetty Automotive Technology Co., Ltd.**
**Changchun, Jilin 130000 (CN)**

(72) Inventor: **WANG, Chao**
**Changchun, Jilin 130000 (CN)**

(74) Representative: **Boult Wade Tennant LLP**
**Salisbury Square House**
**8 Salisbury Square**
**London EC4Y 8AP (GB)**

(56) References cited:
EP-A2- 2 590 307    CN-A- 105 978 123
CN-A- 108 471 227    CN-A- 108 471 227
CN-A- 112 994 472    CN-A- 113 690 983
CN-B- 103 887 982    JP-B1- 5 866 614
US-A1- 2002 001 210

• WANG CHAO-CHUN ET AL: "Efficiency improvement in adjustable deadtime of LLC resonant converters", 2014 INTERNATIONAL CONFERENCE ON INTELLIGENT GREEN BUILDING AND SMART GRID (IGBSG), IEEE, 23 April 2014 (2014-04-23), pages 1 - 4, XP032607078, DOI: 10.1109/IGBSG.2014.6835163

**Description**

RELATED APPLICATION

The present disclosure claims the priority of the Chinese patent application with an application number of 202110988747.2, an invention title of 'dead time determination method, charging driving circuit, apparatus, device and medium', and filed on August 26, 2021.

TECHNICAL FIELD

The present disclosure relates to the field of electric power, and particularly to a dead time determination method, a charging driving circuit, an apparatus, a device and a medium.

BACKGROUND

This section is intended to provide a background or context for the embodiments of the present disclosure set forth in the claims. The description here is not admitted to be the prior art although it is included in this section.

With the development of new energy automobiles, it is a new market demand to charge the new energy automobiles quickly. The existing charging piles often need a long charging duration to charge electric automobiles. In order to improve the charging efficiency of a power source, a power component in a bridge circuit should work in a soft switching state, so it is necessary to reasonably adjust the dead time corresponding to the power component.

In the related art, fixed time control is usually adopted to control the dead time of the power component. However, when the dead time is controlled in this way in the related art, the dead time in some working areas may be shorter than actual soft switching time, which leads to insufficient soft switching and reduces the charging efficiency of the power source.

Patent document JP 5 866614 B1 discloses a dead time determination method.

SUMMARY

The invention is defined by the features of the independent claims. The dependent claims recite advantageous embodiments of the invention. The embodiments of the present disclosure provide a dead time determination method for determining dead time of a charging driving circuit in real time, including: acquiring output current of a charging driving circuit; determining a load status of the charging driving circuit according to the output current of the charging driving circuit; acquiring an output voltage of the charging driving circuit; and determining dead time of the charging driving circuit according to the output voltage and the load status of the charging driving circuit.

Further, the load status is a no-load status or a loaded status.

Further, determining the dead time $y_1$ of the charging driving circuit in the no-load status includes: calculating a product of a proportional coefficient $k$ and the output voltage $x$; and calculating a sum of the product and a bias constant $b$, as the dead time $y_1$ of the charging driving circuit in the no-load status.

Further, determining the dead time $y$ of the charging driving circuit in the loaded status includes: calculating a product of a first coefficient and a ratio of a system clock frequency $f$ to a working frequency; calculating a difference between the dead time $y_1$ of the charging driving circuit in the no-load status and the product; and calculating a product of the difference and a second coefficient, as the dead time $y$ of the charging driving circuit in the loaded status.

Further, determining the load status of the charging driving circuit according to the output current of the charging driving circuit includes: if the output current of the charging driving circuit is greater than a first preset threshold, determining the load status of the charging driving circuit as a loaded status; and if the output current of the charging driving circuit is less than a second preset threshold, determining the load status of the charging driving circuit as a no-load status.

Further, the first preset threshold is greater than the second preset threshold.

The embodiments of the present disclosure further provide a charging driving circuit to solve the technical problem that the power device in the existing charging pile adopts a fixed dead time and requires a long charging time for charging the electric automobile. The charging driving circuit includes: a power source module, a voltage collection module, a current collection module, a transistor driving circuit, a transistor switching circuit and a micro-control unit; in which the power source module is connected to a power source device and configured to provide a power supply voltage; the transistor switching circuit is connected to a load device and configured to supply power to the load device; the transistor driving circuit is connected between the micro-control unit and the transistor switching circuit, and configured to drive the transistor switching circuit to be turned on or off; the voltage collection module is connected to an output end of the transistor switching circuit and configured to collect an output voltage of the transistor switching circuit; the current collection module is connected to the output end of the transistor switching circuit and configured to collect output current of the transistor switching circuit; the micro-control unit is connected to the voltage collection module and the current collection module respectively, in which the micro-control unit is configured to determine dead time of the charging driving circuit according to the output voltage of the transistor switching circuit and the load status of the charging driving circuit, and generate a control signal that controls the transistor switching circuit to be turned on or off according to the dead time.

Further, the transistor driving circuit is implemented by a first drive chip and a second drive chip, each being a dual-channel isolated gate driver with dual input interfaces to drive a half-bridge circuit or a full-bridge circuit.

Further, the chip model used for the first drive chip and the second drive chip is UCC21520.

Further, the micro-control unit includes: an acquisition unit configured to acquire the output voltage and the output current of the charging driving circuit; a judgement unit configured to judge a load status of the charging driving circuit according to the output current; and a calculation unit configured to calculate the dead time of the charging driving circuit according to the output voltage and the load status.

The embodiments of the present disclosure further provide a charging apparatus to solve the technical problem that the power device in the existing charging pile adopts a fixed dead time and requires a long charging time for charging the electric automobile. The charging device includes: the aforementioned charging driving circuit.

The embodiments of the present disclosure further provide a computer device to solve the technical problem that the power device in the existing charging pile adopts a fixed dead time and requires a long charging time for charging the electric automobile. The computer device includes a memory, a processor, and a computer program stored in the memory and executable in the processor, in which when executing the computer program, the processor implements the aforementioned dead time determination method.

The embodiments of the present disclosure further provide a computer-readable storage medium to solve the technical problem that the power device in the existing charging pile adopts a fixed dead time and requires a long charging time for charging the electric automobile. The computer-readable storage medium stores a computer program which performs the aforementioned dead time determination method.

According to the embodiments of the present disclosure, after the output current of the charging driving circuit is collected, the load status of the charging driving circuit is determined according to the output current of the charging driving circuit, and after the output voltage of the charging driving circuit is collected, the dead time of the charging driving circuit is determined according to the output voltage and the load status of the charging driving circuit, so as to obtain the dead time of the charging driving circuit in different load statuses, thereby ensuring sufficient soft switching, and then enabling the charging apparatus to output stable voltage or current.

BRIEF DESCRIPTION OF THE DRAWINGS

In order to more clearly explain the technical solutions in the embodiments of the present disclosure or in the prior art, the drawings to be used in the description of the embodiments or the prior art will be briefly introduced as follows. Obviously, the drawings concerned in the following description only illustrate some embodiments of the present disclosure, and those of ordinary skill in the art can obtain other drawings from them without paying any creative labor.

FIG. 1 illustrates a schematic diagram of a charging driving circuit according to an embodiment of the present disclosure;
FIG. 2 illustrates a schematic diagram of a MOS driving circuit according to an embodiment of the present disclosure;
FIG. 3 illustrates a flowchart of a dead time determination method according to an embodiment of the present disclosure;
FIG. 4 illustrates a flowchart of a specific implementation of a dead time determination method according to an embodiment of the present disclosure; and
FIG. 5 illustrates a schematic diagram of a computer device according to an embodiment of the present disclosure.

Reference signs:

10: power source module;
20: voltage collection module;
30: current collection module;
40: transistor driving circuit;
50: transistor switching circuit;
60: micro-control unit;
70: computer device;
701: memory;
702: processor.

DETAILED OF THE EMBODIMENTS

In order that the objectives, technical solutions and advantages of the embodiments of the present disclosure are clearer, the embodiments of the present disclosure will be further described in detail below with reference to the drawings. Here, the exemplary embodiments of the present disclosure and the description thereof are used to explain the present disclosure, rather than limitations thereto.

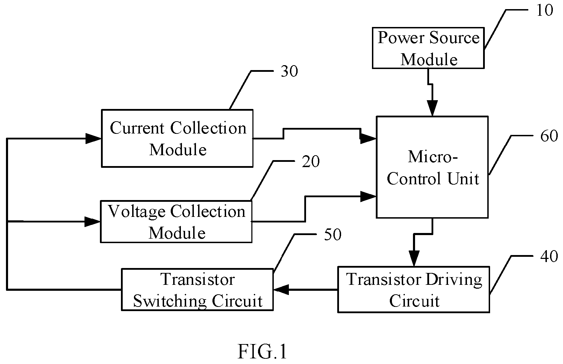

An embodiment of the present disclosure provides a charging driving circuit, and FIG. 1 illustrates a schematic diagram of a charging driving circuit according to an embodiment of the present disclosure. As illustrated in FIG. 1, the charging driving circuit includes a power source module 10, a voltage collection module 20, a current collection module 30, a transistor driving circuit 40, a transistor switching circuit 50 and a micro-control unit 60;

in which the power source module 10 is connected to a power source device and configured to provide a power supply voltage;

the transistor switching circuit 50 is connected to a load device and configured to supply power to the load device;

the transistor driving circuit 40 is connected between the micro-control unit 60 and the transistor switching circuit 50, and configured to drive the transistor switching circuit to be turned on or off;

the voltage collection module 20 is connected to an output end of the transistor switching circuit 50 and configured to collect an output voltage of the transistor switching circuit 50;

the current collection module 30 is connected to the output end of the transistor switching circuit 50 and configured to collect output current of the transistor switching circuit 50; and

the micro-control unit 60 is connected to the voltage collection module 20 and the current collection module 30 respectively, and configured to generate a control signal that controls the transistor switching circuit 50 to be turned on or off according to the output voltage and the output current of the transistor switching circuit 50.

During implementation, the micro-control unit 60 may include an acquisition unit, a judgement unit and a calculation unit, in which the acquisition unit is configured to acquire the output voltage and the output current of the charging driving circuit; the judgement unit is configured to judge a load status of the charging driving circuit according to the output current; and the calculation unit is configured to calculate the dead time of the charging driving circuit according to the output voltage and the load status.

It should be noted that the control signal output by the micro-control unit 60 may be a square wave signal, and high and low levels are output to control the transistor switching circuit to be turned on or off. When the transistor switching circuit is turned on, energy is transferred to a voltage output end, and an output voltage is regulated by controlling the time and speed of turning on the transistor switching circuit so as to output a stable DC voltage.

Since the Metal Oxide Semiconductor Field Effect Transistor (MOSFET) has the advantages of being smaller and more energy-saving, in an embodiment, the transistor according to the embodiments of the present disclosure adopts the MOSFET.

In the charging driving circuit according to the embodiments of the present disclosure, the micro-control unit is implemented by a single chip microcomputer. In an embodiment, the microcontroller may adopt a chip with a model of TMS320F280049CPZS, the main frequency of which is 100 MHZ, which is powerful and has many on-chip analog peripherals.

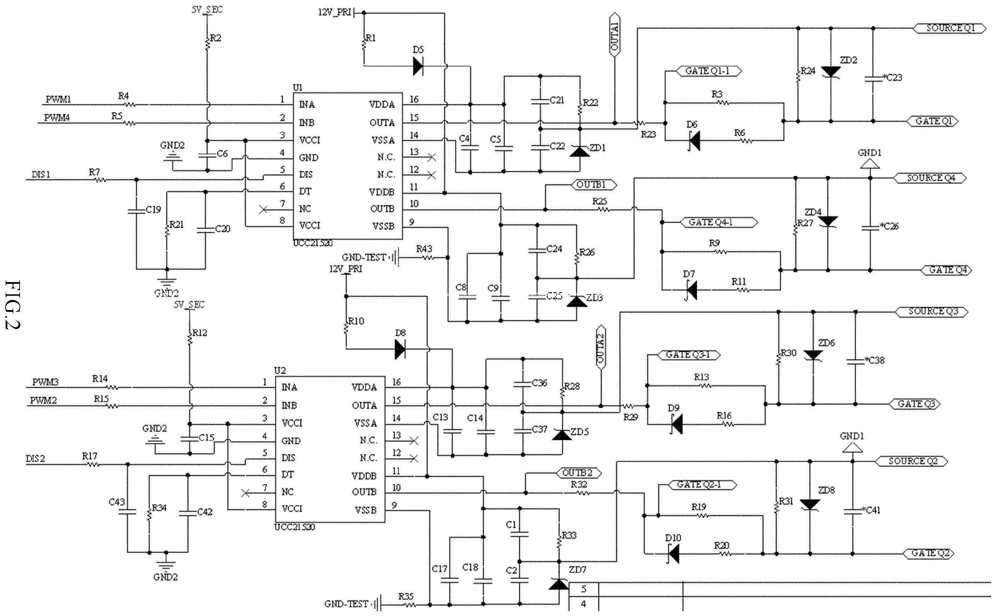

In order to be compatible with a half-bridge circuit and a full-bridge circuit, in an embodiment, in the charging driving circuit according to the embodiments of the present disclosure, the transistor driving circuit is implemented by a first drive chip and a second drive chip, each being a dual-channel isolated gate driver with dual input interfaces to drive the half-bridge circuit or the full-bridge circuit. FIG. 2 illustrates a schematic diagram of a MOS driving circuit according to an embodiment of the present disclosure. U1 and U2 in FIG. 2 represent a first drive chip and a second drive chip, respectively. Herein the chip model used for the first drive chip and the second drive chip is UCC21520.

The UCC21520 is an isolated dual-channel gate driver with 4A peak source current and 6A peak sink current. The UCC21520 supports a high switching frequency and has a high isolation strength, and is configured to drive a Metal-Oxide-Semiconductor Field-Effect Transistor (MOSFET), an Insulated Gate Bipolar Transistor (IGBT), etc. Herein, each of the first drive chip and the second drive chip includes a drive part and a control part isolated from each other, and two internal drive channels isolated from each other.

The embodiments of the present disclosure further provide a charging apparatus, which includes any one of the aforementioned charging driving circuits.

It should be noted that the charging apparatus according to the embodiments of the present disclosure may be, but not limited to, a charging apparatus for an electric automobile.

The embodiments of the present disclosure further provide a dead time determination method for determining dead time of a charging driving circuit in real time, and the dead time determination method may be used for, but not limited to, determining the dead time of the aforementioned charging driving circuit.

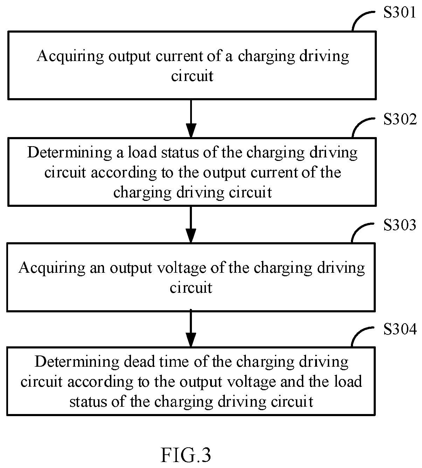

FIG. 3 illustrates a flowchart of a dead time determination method according to an embodiment of the present disclosure. As illustrated in FIG. 3, the method includes:

S301: acquiring output current of a charging driving circuit;

S302: determining a load status of the charging driving circuit according to the output current of the charging driving circuit;

S303: acquiring an output voltage of the charging driving circuit; and

S304: determining dead time of the charging driving circuit according to the output voltage and the load status of the charging driving circuit.

It should be noted that the dead time in the embodiments of the present disclosure is a protection period set to prevent the upper and lower tubes of the full-bridge circuit or the half-bridge circuit from being turned on simultaneously due to the problem of the switching speed. The output current of the charging driving circuit is also the output current of the transistor switching circuit, and the output voltage of the charging driving circuit is also the output voltage of the transistor switching circuit. The load status of the charging driving circuit may be determined according to the output current of the charging driving circuit as follows: if the output current of the charging driving circuit is greater than a first preset threshold, determining the load status of the charging driving circuit as a loaded status; if the output current of the charging driving circuit is less than a second preset threshold, determining the load status of the charging driving circuit as a no-load status, in which the first preset threshold is greater than the second preset threshold, for example, the first preset threshold has a value range of 0.15A to 0.3A, and the second preset threshold has a value range of 0.05A to 0.1A.

In the embodiments of the present disclosure, the load status includes a no-load status or a loaded status.

In the embodiments of the present disclosure, the no-load status refers to a state in which the charging driving circuit is connected to a load device but not charged; and the loaded status refers to a state in which the charging driving circuit is connected to the load device while being charged.

In an embodiment, the dead time determination method according to the embodiments of the present disclosure may determine the dead time $y_1$ of the charging driving circuit in the no-load status by the following steps: calculating a first product of a proportional coefficient $k$ and the output voltage $x$; and calculating a sum of the first product and a bias constant $b$, as the dead time $y_1$ of the charging driving circuit in the no-load status. In an embodiment, the dead time of the charging driving circuit in the no-load status is calculated by Formula (1).

$$y_1 = kx + b \qquad (1)$$

where $y_1$ denotes the dead time of the charging driving circuit in the no-load status; $k$ denotes a proportional coefficient representing a time unit; $x$ denotes the output voltage; and $b$ denotes a bias constant.

Further, the dead time determination method according to the embodiments of the present disclosure may determine the dead time $y$ of the charging driving circuit in the loaded status by the following steps: calculating a second product of a first coefficient and a ratio of a system clock frequency $f$ to a working frequency Fsw; calculating a difference between the dead time $y_1$ of the charging driving circuit in the no-load status and the second product; and calculating a product of the difference and a second coefficient as the dead time $y$ of the charging driving circuit in the loaded status. In an embodiment, the dead time of the charging driving circuit in the loaded status is calculated by Formula (2), in which the first coefficient is equal to 0.3 and the second coefficient is equal to 10.

$$y = (y_1 - 0.3 \times f/Fsw) \times 10 \qquad (2)$$

where $y$ denotes the dead time of the charging driving circuit in the loaded status; $f$ denotes a system clock frequency, which has a value range of 0 to 16 KHz; Fsw denotes a working frequency, which has a value range of 50 Hz to 60 Hz.

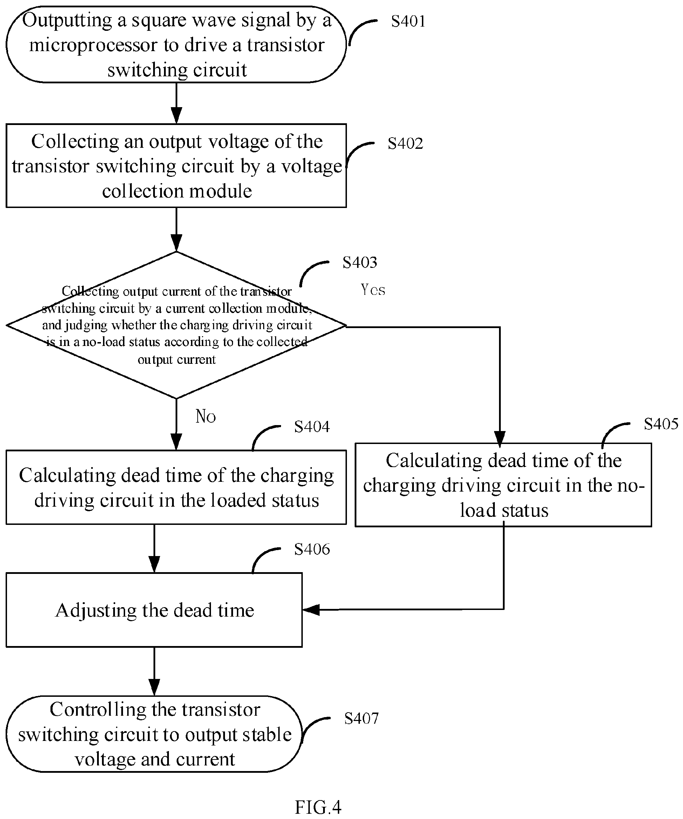

FIG. 4 illustrates a flowchart of a specific implementation of a dead time determination method according to an embodiment of the present disclosure, including:

    S401: outputting a square wave signal by a microprocessor to drive a transistor switching circuit;
    S402: collecting an output voltage of the transistor switching circuit by a voltage collection module;
    S403: collecting output current of the transistor switching circuit by a current collection module, and judging whether the charging driving circuit is in a no-load status according to the collected output current; if not, performing S404; and if so, performing S405;
    S404: calculating dead time of the charging driving circuit in the loaded status;
    S405: calculating dead time of the charging driving circuit in the no-load status;
    S406: adjusting the dead time;
    S407: controlling the transistor switching circuit to output stable voltage and current.

It should be noted that when the charging driving circuit is in the no-load status, the dead time varies with the output voltage. The range of the output voltage may be 30 V to 400 V. According to different output voltages, in order to make the charging driving circuit work in the soft switching area, the range of the working frequency of the system is adjusted and determined at first. For example, when the range of the no-load working frequency is 165 K, the range of the dead time is 1900 ns to 400 ns. The dead time of the charging driving circuit in the no-load status may be calculated by the above Formula (1). When the charging driving circuit is in the loaded status, the dead time thereof is calculated by the above Formula (2) according to the dead time $y_1$ of the charging driving circuit in the no-load status, the working frequency Fsw (the working frequency may be adjusted according to the output voltage using a Proportional Integration Differentiation (PID) adjustment mode) and the system clock frequency $f$, and then the transistor switching circuit can be controlled to output stable voltage and current according to the dead time of the charging driving circuit in the loaded status.

It should be noted that depending on the output voltage and the output current, the range of the system working frequency of the charging driving circuit according to the embodiments of the present disclosure may be 90K to 165K, and the range of the dead time may be 400 ns to 900 ns.

In order to make the whole system achieve a better working state and a higher efficiency to meet the customer requirements, in one embodiment, the dead time determination method according to the embodiments of the present disclosure may also support the switching between the no-load status and the loaded status.

For example, in a case where the charging driving circuit works in the no-load status, when the output current of the transistor switching circuit is greater than a first preset threshold (e.g., 0.2A), the transistor switching circuit switches from the no-load status to the loaded status; and in a case where the charging driving circuit works in the loaded status, when the output current of the transistor switching circuit is less than a second preset threshold (e.g., 0.1A), the transistor switching circuit switches from the loaded status to the no-load status.

Optionally, the load device in the embodiments of the present disclosure is a high-power load device. In a case where the load device is an electric automobile, the charging driving circuit according to the embodiments of the present disclosure may be disposed in a charging pile. The electric automobile can be rapidly and stably charged by disposing the charging driving circuit according to the embodiments of the present disclosure in the charging pile of the electric automobile. The charging driving circuit according to the embodiments of the present disclosure achieves a simple design, an easy replacement of components and a strong market competitiveness. The dead time determination method for the charging driving circuit according to the embodiments of the present disclosure is practical and simple.

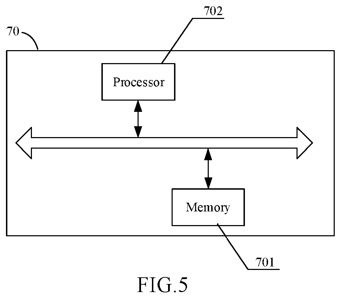

The embodiments of the present disclosure further provide a computer device to solve the technical problem that the power device in the existing charging pile adopts a fixed dead time and requires a long charging time for charging the electric automobile. FIG. 5 illustrates a schematic diagram of a computer device according to an embodiment of the present disclosure. As illustrated in FIG. 5, the computer device 70 includes a memory 701, a processor 702, and a computer program which is stored in the memory 701 and executable in the processor 702, in which when executing the program, the processor 702 implements the aforementioned dead time determination method.

The embodiments of the present disclosure further provide a computer-readable storage medium to solve the technical problem that the power device in the existing charging pile adopts a fixed dead time and requires a long charging time for charging the electric automobile. The computer-readable storage medium stores a computer program which performs the aforementioned dead time determination method.

To sum up, the charging driving circuit, the charging apparatus, the dead time determination method, the computer device and the computer-readable storage medium according to the embodiments of the present disclosure collect the output voltage of the transistor driving circuit by the voltage collection module and collect the output current of the transistor driving circuit by the current collection module, so that the micro-control unit can generate a control signal which controls the transistor switching circuit to be turned on or off according to the output voltage and the output current of the transistor switching circuit, and the transistor switching circuit can output a stable voltage to supply power to the load device. According to the charging driving circuit and the dead time determination method thereof according to the embodiments of the present disclosure, the charging apparatus can output stable voltage or current to the load device.

Those skilled in the art should appreciate that any embodiment of the present disclosure can be provided as a method, a system or a computer program product. Therefore, the present disclosure can take the form of a full hardware embodiment, a full software embodiment, or an embodiment combining software and hardware. Moreover, the present invention can take the form of a computer program product implemented on one or more computer usable storage mediums (including, but not limited to, a magnetic disc memory, CD-ROM, optical storage, etc.) containing therein computer usable program codes.

The present disclosure is described with reference to a flowchart and/or a block diagram of the method, apparatus (system) and computer program product according to the embodiments of the present disclosure. It should be appreciated that each flow and/or block in the flowchart and/or the block diagram and a combination of flows and/or blocks in the flowchart and/or the block diagram can be realized by computer program instructions. Those computer program instructions can be provided to a general computer, a dedicated computer, an embedded processor or a processor of other programmable data processing device to produce a machine, so that the instructions executed by the processor of the computer or other programmable data processing device produce means for realizing specified functions in one or more flows in the flowchart and/or one or more blocks in the block diagram.

These computer program instructions may also be stored in a computer readable memory capable of guiding the computer or other programmable data processing devices to work in a particular manner, so that the instructions stored in the computer readable memory can produce manufacture articles including an instructing device which realizes function(s) specified in one or more flows in the flowchart and/or one or more blocks in the block diagram.

These computer program instructions may also be loaded onto a computer or any other programmable data processing device, so that a series of operation steps can be performed on the computer or other programmable data processing device to produce a processing realized by the computer, thus the instructions executed on the computer or other programmable device provide step(s) for realizing function(s) specified in one or more flows in the flowchart and/or one or more blocks in the block diagram.

The specific embodiments described above further make detailed explanations to the objectives, technical solutions and advantageous effects of the present disclosure. The scope of protection is defined by the appended claims.

**Claims**

1. A dead time determination method for determining dead time of a charging driving circuit in real time, comprising:

acquiring output current of a charging driving circuit;
determining a load status of the charging driving circuit according to the output current of the charging driving circuit, wherein the load status is a no-load status or a loaded status;
acquiring an output voltage of the charging driving circuit;
determining the dead time $y_1$ of the charging driving circuit in the no-load status comprising:

calculating a product of a proportional coefficient k and the output voltage $x$; and
calculating a sum of the product and a bias constant $b$, as the dead time $y_1$ of the charging driving circuit in the no-load status, and

determining the dead time $y$ of the charging driving circuit in the loaded status comprises:

calculating a product of a first coefficient and a ratio of a system clock frequency $f$ to a working frequency $Fsw$, wherein the system clock frequency $f$ is a clock frequency generated by the microcontroller in a system of the charging driving circuit, and the working frequency $Fsw$ is a switching frequency of a transistor in the charging drive circuit;
calculating a difference between the dead time $y_1$ of the charging driving circuit in the no-load status and the product; and
calculating a product of the difference and a second coefficient, as the dead time $y$ of the charging driving circuit in the loaded status.

2. The dead time determination method according to claim 1, wherein determining the load status of the charging driving circuit according to the output current of the charging driving circuit comprises:

if the output current of the charging driving circuit is greater than a first preset threshold, determining the load status of the charging driving circuit as a loaded status; and
if the output current of the charging driving circuit is less than a second preset threshold, determining the load status of the charging driving circuit as a no-load status.

3. The dead time determination method according to claim 2, wherein the first preset threshold is greater than the second preset threshold.

4. A charging driving circuit, comprising: a power source module (10), a voltage collection module (20), a current collection module (30), a transistor driving circuit (40), a transistor switching circuit (50) and a micro-control unit (60);

wherein the power source module (10) is connectable to a power source device and configured to provide a power supply voltage;
the transistor switching circuit (50) is connectable to a load device and configured to supply power to the load device;
the transistor driving circuit (40) is connected between the micro-control unit (60) and the transistor switching circuit (50), and configured to drive the transistor switching circuit (50) to be turned on or off;
the voltage collection module (20) is connected to an output end of the transistor switching circuit (50) and configured to collect an output voltage of the transistor switching circuit (50);
the current collection module (30) is connected to the output end of the transistor switching circuit (50) and configured to collect output current of the transistor switching circuit (50);
the micro-control unit (60) is connected to the voltage collection module (20) and the current collection module (30) respectively, wherein the micro-control unit (60) comprises:

an acquisition unit configured to acquire the output voltage and the output current of the charging driving circuit;
a judgement unit configured to judge a load status of the charging driving circuit according to the output current, wherein the load status is a no-load status or a loaded status; and
a calculation unit configured to:

calculate the dead time $y_1$ of the charging driving circuit in the no-load status and in the loaded status, wherein the calculation unit is further configured to:

calculate a product of a proportional coefficient *k* and the output voltage *x*; and
calculate a sum of the product and a bias constant *b*, as the dead time $y_1$ of the charging driving circuit in the no-load status,

wherein the calculation unit is further configured to:

calculate a product of a first coefficient and a ratio of a system clock frequency *f* to a working frequency *Fsw*, wherein the system clock frequency *f* is a clock frequency generated by the microcontroller in a system of the charging driving circuit, and the working frequency *Fsw* is a switching frequency of a transistor in the charging drive circuit;
calculate a difference between the dead time $y_1$ of the charging driving circuit in the no-load status and the product; and

calculate a product of the difference and a second coefficient, as the dead time *y* of the charging driving circuit in the loaded status;
wherein the calculation unit is further configured to generate a control signal that controls the transistor switching circuit (50) to be turned on or off according to the dead time.

5. The charging driving circuit according to claim 4, wherein the transistor driving circuit (40) is implemented by a first drive chip and a second drive chip, each being a dual-channel isolated gate driver with dual input interfaces to drive a half-bridge circuit or a full-bridge circuit.

6. The charging driving circuit according to claim 5, wherein the chip model used for the firs1 drive chip and the second drive chip is UCC21520.

7. A charging apparatus, comprising the charging driving circuit according to any one of claims 4 to 6.

8. A computer-readable storage medium, which stores a computer program, which when executed by a computer device connected to a charging driving circuit, performs the dead time determination method according to any one of claims 1 to 3.

**Patentansprüche**

1. Totzeitbestimmungsverfahren zur Bestimmung der Totzeit einer Ladetreiberschaltung in Echtzeit, umfassend:

Erfassen des Ausgangsstroms einer Ladetreiberschaltung;
Bestimmen eines Lastzustands der Ladetreiberschaltung anhand des Ausgangsstroms der Ladetreiberschaltung, wobei der Lastzustand ein Leerlaufzustand oder ein Belastungszustand ist;
Erfassen einer Ausgangsspannung der Ladetreiberschaltung;
Bestimmen der Totzeit $y_1$ der Ladetreiberschaltung im Leerlaufzustand, umfassend:

Berechnen eines Produkts aus einem Proportionalkoeffizienten *k* und der Ausgangsspannung *x*, und
Berechnen einer Summe aus dem Produkt und einer Vorspannungskonstante *b* als Totzeit $y_1$ der Ladetreiberschaltung im Leerlaufzustand, und

Bestimmen der Totzeit *y* der Ladetreiberschaltung im Belastungszustand, umfassend:
Berechnen eines Produkts aus einem ersten Koeffizienten und einem Verhältnis einer Systemtaktfrequenz *f* zu einer Arbeitsfrequenz *Fsw*, wobei die Systemtaktfrequenz *f* eine vom Mikrocontroller in einem System der Ladetreiberschaltung erzeugte Taktfrequenz ist und die Arbeitsfrequenz *Fsw* eine Schaltfrequenz eines Transistors in der Ladetreiberschaltung ist;
Berechnen einer Differenz zwischen der Totzeit $y_1$ der Ladetreiberschaltung im Leerlaufzustand und dem Produkt; und
Berechnen eines Produkts aus der Differenz und einem zweiten Koeffizienten als Totzeit *y* der Ladetreiberschaltung im Belastungszustand.

2. Totzeitbestimmungsverfahren nach Anspruch 1, bei dem das Bestimmen des Lastzustands der Ladetreiberschaltung anhand des Ausgangsstroms der Ladetreiberschaltung umfasst:

wenn der Ausgangsstrom der Ladetreiberschaltung größer als ein erster voreingestellter Schwellenwert ist, Bestimmen des Lastzustands der Ladetreiberschaltung als Belastungszustand; und
wenn der Ausgangsstrom der Ladetreiberschaltung kleiner als ein zweiter voreingestellter Schwellenwert ist, Bestimmen des Lastzustands der Ladetreiberschaltung als Leerlaufzustand.

3. Totzeitbestimmungsverfahren nach Anspruch 2, bei dem der erste voreingestellte Schwellenwert größer als der zweite voreingestellte Schwellenwert ist.

4. Ladetreiberschaltung, umfassend: ein Stromquellenmodul (10), ein Spannungserfassungsmodul (20), ein Stromerfassungsmodul (30), eine Transistortreiberschaltung (40), eine Transistorschalterschaltung (50) und eine Mikrosteuereinheit (60);

wobei das Stromquellenmodul (10) mit einer Stromquelleneinrichtung verbindbar und konfiguriert ist, um eine Versorgungsspannung bereitzustellen;
die Transistorschalterschaltung (50) mit einer Lastvorrichtung verbindbar und konfiguriert ist, um die Lastvorrichtung mit Strom zu versorgen;
die Transistortreiberschaltung (40) zwischen der Mikrosteuereinheit (60) und der Transistorschalterschaltung (50) angeschlossen und konfiguriert ist, um die Transistorschalterschaltung (50) zum Ein- oder Ausschalten anzusteuern;
das Spannungserfassungsmodul (20) mit einem Ausgangsende der Transistorschalterschaltung (50) verbunden und konfiguriert ist, um eine Ausgangsspannung der Transistorschalterschaltung (50) zu erfassen;
das Stromerfassungsmodul (30) mit dem Ausgangsende der Transistorschalterschaltung (50) verbunden und konfiguriert ist, um einen Ausgangsstrom der Transistorschalterschaltung (50) zu erfassen;
die Mikrosteuereinheit (60) jeweils mit dem Spannungserfassungsmodul (20) und dem Stromerfassungsmodul (30) verbunden ist, wobei die Mikrosteuereinheit (60) umfasst:
eine Erfassungseinheit, die konfiguriert ist, um die Ausgangsspannung und den Ausgangsstrom der Ladetreiberschaltung zu erfassen;
eine Beurteilungseinheit, die konfiguriert ist, um einen Laststatus der Ladetreiberschaltung entsprechend dem Ausgangsstrom zu beurteilen, wobei der Laststatus ein Leerlaufstatus oder ein Belastungsstatus ist; und
eine Berechnungseinheit, die konfiguriert ist, um:
die Totzeit $y_1$ der Ladetreiberschaltung im Leerlaufstatus und im Belastungsstatus zu berechnen, wobei die Berechnungseinheit ferner konfiguriert ist, um:

ein Produkt aus einem Proportionalitätskoeffizienten $k$ und der Ausgangsspannung $x$ zu berechnen, und
eine Summe aus dem Produkt und einer Vorspannungskonstante $b$ als Totzeit $y_1$ der

Ladesteuerschaltung im Leerlaufzustand zu berechnen,
wobei die Berechnungseinheit ferner konfiguriert ist, um:

ein Produkt aus einem ersten Koeffizienten und einem Verhältnis einer Systemtaktfrequenz $f$ zu einer Arbeitsfrequenz $Fsw$ zu berechnen, wobei die Systemtaktfrequenz $f$ eine vom Mikrocontroller in einem System der Ladetreiberschaltung erzeugte Taktfrequenz ist und die Arbeitsfrequenz $Fsw$ eine Schaltfrequenz eines Transistors in der Ladetreiberschaltung ist;
eine Differenz zwischen der Totzeit $y_1$ der Ladetreiberschaltung im Leerlaufzustand und dem Produkt zu berechnen; und

ein Produkt aus der Differenz und einem zweiten Koeffizienten als Totzeit $y$ der Ladetreiberschaltung im Belastungszustand zu berechnen;
wobei die Berechnungseinheit ferner konfiguriert ist, um ein Steuersignal zu erzeugen, das die Transistorschalterschaltung (50) entsprechend der Totzeit ein- oder ausschaltet.

5. Ladetreiberschaltung nach Anspruch 4, bei der die Transistortreiberschaltung (40) durch einen ersten Treiberchip und einen zweiten Treiberchip implementiert ist, die jeweils ein zweikanaliger isolierter Gate-Treiber mit zwei Eingangsschnittstellen zum Ansteuern einer Halbbrücken- oder Vollbrückenschaltung sind.

6. Ladetreiberschaltung nach Anspruch 5, bei der das für den ersten Treiberchip und den zweiten Treiberchip verwendete Chipmodell UCC21520 ist.

7. Ladegerät, das die Ladetreiberschaltung nach einem der Ansprüche 4 bis 6 umfasst.

8. Computerlesbares Speichermedium, das ein Computerprogramm speichert, das, wenn es von einem mit einer Ladetreiberschaltung verbundenen Computergerät ausgeführt wird, das Verfahren zur Bestimmung der Totzeit nach einem der Ansprüche 1 bis 3 ausführt.

**Revendications**

1. Procédé de détermination de temps mort pour déterminer un temps mort d'un circuit d'attaque de charge en temps réel, comprenant les étapes consistant à :

acquérir un courant de sortie d'un circuit d'attaque de charge ;

déterminer un état de charge du circuit d'attaque de charge en fonction du courant de sortie du circuit d'attaque de charge, dans lequel l'état de charge est un état à vide ou un état chargé ;

acquérir une tension de sortie du circuit d'attaque de charge ;

déterminer le temps mort $y_1$ du circuit d'attaque de charge à l'état à vide, comprenant les étapes consistant à :

calculer un produit d'un coefficient proportionnel $k$ et de la tension de sortie $x$ ; et
calculer une somme du produit et d'une constante de polarisation $b$, en tant que temps mort $y_1$ du circuit d'attaque de charge à l'état à vide, et

déterminer le temps mort $y$ du circuit d'attaque de charge à l'état chargé, comprenant les étapes consistant à :

calculer un produit d'un premier coefficient et d'un rapport d'une fréquence d'horloge de système $f$ à une fréquence de travail $Fsw$, dans lequel la fréquence d'horloge de système $f$ est une fréquence d'horloge générée par le microcontrôleur dans un système du circuit d'attaque de charge, et la fréquence de travail $Fsw$ est une fréquence de commutation d'un transistor dans le circuit d'attaque de charge ;
calculer une différence entre le temps mort $y_1$ du circuit d'attaque de charge à l'état à vide et le produit ; et
calculer un produit de la différence et d'un second coefficient, en tant que temps mort $y$ du circuit d'attaque de charge à l'état chargé.

2. Procédé de détermination de temps mort selon la revendication 1, dans lequel la détermination de l'état de charge du circuit d'attaque de charge en fonction du courant de sortie du circuit d'attaque de charge comprend les étapes consistant à :

si le courant de sortie du circuit d'attaque de charge est supérieur à un premier seuil prédéfini, déterminer l'état de charge du circuit d'attaque de charge en tant qu'état chargé ; et
si le courant de sortie du circuit d'attaque de charge est inférieur à un second seuil prédéfini, déterminer l'état de charge du circuit d'attaque de charge en tant qu'état à vide.

3. Procédé de détermination de temps mort selon la revendication 2, dans lequel le premier seuil prédéfini est supérieur au second seuil prédéfini.

4. Circuit d'attaque de charge, comprenant : un module de source d'alimentation (10), un module de collecte de tension (20), un module de collecte de courant (30), un circuit d'attaque de transistor (40), un circuit de commutation de transistor (50) et une unité de micro-contrôle (60) ;

dans lequel le module de source d'alimentation (10) peut être connecté à un dispositif de source d'alimentation et est configuré pour fournir une tension d'alimentation ;
le circuit de commutation de transistor (50) peut être connecté à un dispositif de charge et est configuré pour alimenter le dispositif de charge ;
le circuit d'attaque de transistor (40) est connecté entre l'unité de micro-contrôle (60) et le circuit de commutation de transistor (50), et configuré pour commander le circuit de commutation de transistor (50) pour qu'il soit allumé ou éteint ;
le module de collecte de tension (20) est connecté à une extrémité de sortie du circuit de commutation de transistor (50) et configuré pour collecter une tension de sortie du circuit de commutation de transistor (50) ;
le module de collecte de courant (30) est connecté à l'extrémité de sortie du circuit de commutation de transistor (50) et configuré pour collecter le courant de sortie du circuit de commutation de transistor (50) ;
l'unité de micro-contrôle (60) est connectée au module de collecte de tension (20) et au module de collecte de courant (30), respectivement, dans lequel l'unité de micro-contrôle (60) comprend :

une unité d'acquisition configurée pour acquérir la tension de sortie et le courant de sortie du circuit d'attaque de charge ;
une unité d'évaluation configurée pour évaluer un état de charge du circuit d'attaque de charge en fonction du courant de sortie, dans lequel l'état de charge est un état à vide ou un état chargé ; et une unité de calcul configurée pour :
calculer le temps mort $y_1$ du circuit d'attaque de charge dans l'état à vide et dans l'état chargé, dans lequel l'unité de calcul est en outre configurée pour :

calculer un produit d'un coefficient proportionnel k et de la tension de sortie $x$ ; et
calculer une somme du produit et d'une constante de polarisation $b$, en tant que temps mort $y_1$ du circuit d'attaque de charge dans l'état à vide,
dans lequel l'unité de calcul est en outre configurée pour

calculer un produit d'un premier coefficient et d'un rapport d'une fréquence d'horloge de système $f$ à une fréquence de travail $Fsw$, dans lequel la fréquence d'horloge de système $f$ est une fréquence d'horloge générée par le microcontrôleur dans un système du circuit d'attaque de charge, et la fréquence de travail $Fsw$ est une fréquence de commutation d'un transistor dans le circuit d'attaque de charge ;

calculer une différence entre le temps mort $y_1$ du circuit d'attaque de charge dans l'état à vide et le produit ; et

calculer un produit de la différence et d'un second coefficient, en tant que temps mort $y$ du circuit d'attaque de charge dans l'état chargé ;

dans lequel l'unité de calcul est en outre configurée pour générer un signal de commande qui commande le circuit de commutation de transistor (50) pour qu'il soit allumé ou éteint en fonction du temps mort.

5. Circuit d'attaque de charge selon la revendication 4, dans lequel le circuit d'attaque de transistor (40) est mis en œuvre par une première puce d'attaque et une seconde puce d'attaque, chacune étant un pilote de grille isolé à double canal avec des interfaces d'entrée doubles pour attaquer un circuit en demi-pont ou un circuit en pont complet.

6. Circuit d'attaque de charge selon la revendication 5, dans lequel le modèle de puce utilisé pour la première puce d'attaque et la seconde puce d'attaque est UCC21520.

7. Appareil de charge, comprenant le circuit d'attaque de charge selon l'une quelconque des revendications 4 à 6.

8. Support de stockage lisible par ordinateur, qui stocke un programme informatique, qui, lorsqu'il est exécuté par un dispositif informatique connecté à un circuit d'attaque de charge, exécute le procédé de détermination de temps mort selon l'une quelconque des revendications 1 à 3.

Power Source
Module ⎯ 10

Current Collection
Module ⎯ 30

Micro-
Control Unit ⎯ 60

Voltage Collection
Module ⎯ 20

Transistor
Switching Circuit ⎯ 50

Transistor Driving
Circuit ⎯ 40

FIG.1

EP 4 395 107 B1

FIG.2

13

S301

Acquiring output current of a charging driving circuit

S302

Determining a load status of the charging driving circuit according to the output current of the charging driving circuit

S303

Acquiring an output voltage of the charging driving circuit

S304

Determining dead time of the charging driving circuit according to the output voltage and the load status of the charging driving circuit

FIG.3

Outputting a square wave signal by a microprocessor to drive a transistor switching circuit — S401

Collecting an output voltage of the transistor switching circuit by a voltage collection module — S402

Collecting output current of the transistor switching circuit by a current collection module, and judging whether the charging driving circuit is in a no-load status according to the collected output current — S403

Yes

No

Calculating dead time of the charging driving circuit in the loaded status — S404

Calculating dead time of the charging driving circuit in the no-load status — S405

Adjusting the dead time — S406

Controlling the transistor switching circuit to output stable voltage and current — S407

FIG.4

FIG.5

**EP 4 395 107 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110988747
- JP 5866614 B